# EUROPEAN PATENT APPLICATION

(11) **EP 1 699 192 A2**
(43) Date of publication of application: **06.09.2006**
(21) Application number: 05254797.3
(22) Date of filing: 29.07.2005
(51) Int. Cl.: H04L 25/03

(54) **Transmission system, transmitter device, and receiver device**

(30) Priority: 04.03.2005 JP 2005060356
(71) Applicant: FUJITSU LIMITED, Kawasaki-shi, Kanagawa 211-8588 (JP)
(72) Inventor: Nakamura, Michiharu, c/o Fujitsu Limited, Kawasaki-shi Kanagawa 211-8588 (JP); Takeo, Kohji, c/o Mobile Techno Corp., Kawasaki-shi Kanagawa 212-0013 (JP)
(74) Representative: Fenlon, Christine Lesley

(57) **Abstract**

A transmission system which is simple in construction and yet can effectively avoid inter-symbol interference. A transmitter device (10) transmits a signal block while repeating the same signal block twice consecutively. A receiver device (20) receives the signal blocks, performs Fourier transform operation (24) on the two identical signal blocks at respective predetermined timings, matches the phases of the two signal blocks with each other by waveform equalization in frequency domain (27), combines the signal blocks, and demodulates (30) the combined signal block. With the transmission system, various propagation path conditions, in particular, changes in delay time can be flexibly coped with by just appropriately setting the Fourier transform operation timing, whereby inter-symbol interference can be avoided more effectively than in the case of using fixed-length GI.

## Description

The present invention relates to transmission systems, transmitter devices and receiver devices, and more particularly, to a transmission system of which the receiving side receives, besides a direct wave, a plurality of delayed waves according to propagation path conditions, and a transmitter device and a receiver device for use in the transmission system.

In recent years, mobile communication systems are expected to meet higher demands for the transmission of not only voice but images and data, and still higher transmission rates are demanded. Consequently, signals have come to be transmitted over a broader bandwidth, giving rise to a problem of influence of frequency selective fading. Also, since the symbol length of a signal becomes shorter, a problem of inter-symbol interference (ISI) arises due to the phenomenon that the receiving side receives the same signal via multiple paths because of reflection and diffraction of the transmitted signal (the phenomenon is hereinafter referred to as multi-path). As a system capable of achieving higher transmission efficiency in such propagation conditions, multi-carrier transmission has been under study.

In multi-carrier transmission, each symbol is distributed to K sub-carriers (frequency bands), so that the carrier has a 1/K transmission bandwidth while the symbol length increases by K times. Since the transmission bandwidth becomes 1/K, the influence of frequency selective fading is mitigated, and where the number K of sub-carriers is large, the frequency selective fading in each carrier can be regarded as flat fading. Also, since the symbol length increases by K times, the influence of the inter-symbol interference lessens. As a system capable of higher-efficiency multi-carrier transmission, orthogonal frequency division multiplexing (OFDM) has been researched in various fields and is actually implemented.

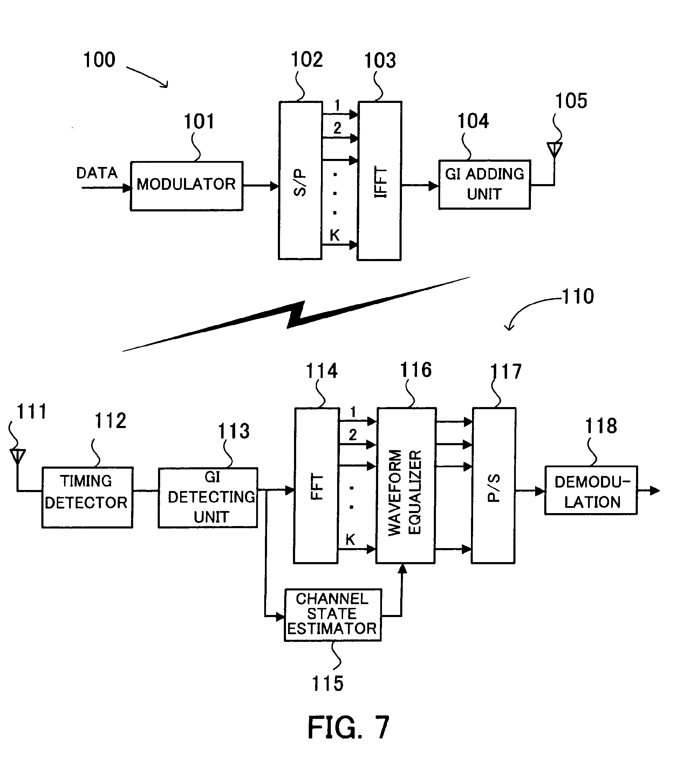

FIG. 7 shows the basic configuration of a previously considered OFDM transmission system.

A transmitter device 100 includes a modulator 101, a serial/parallel (S/P) converter 102, an inverse fast Fourier transform (IFFT) processor 103, a guard interval (GI) adding unit 104, and an antenna 105.

On the other hand, a receiver device 110 includes an antenna 111, a timing detector 112, a GI deleting unit 113, a fast Fourier transform (FFT) processor 114, a channel state estimator 115, a waveform equalizer 116, a parallel/serial (P/S) converter 117, and a demodulator 118.

Operation of the previously considered OFDM transmission system will be described.

In the transmitter device 100, data to be transmitted is modulated by the modulator 101 and then is subjected to serial/parallel conversion in the serial/parallel converter 102 to distribute the data to sub-carriers. It is assumed here that the number of sub-carriers is K. Then, in the IFFT processor 103, K symbols allotted to the respective sub-carriers are converted to a time domain signal by IFFT operation. A set of K pieces of data output from the IFFT processor 103 is called FFT block or OFDM symbol, and will be hereinafter referred to as FFT block. To avoid inter-symbol interference attributable to multi-path, a GI is added to the FFT block in the GI adding unit 104 and the block is then transmitted via the antenna 105. In the receiver device 110, on the other hand, the antenna 111 receives the FFT block, and the timing detector 112 performs timing detection to detect the position of the FFT block. Then, a block window (not shown in FIG. 7), which is adapted to extract an FFT operation interval by means of a window function etc., cuts out the FFT block including the GI. After the GI is removed by the GI deleting unit 113, the FFT block is converted to a frequency domain signal by the FFT processor 114. The channel state estimator 115 estimates the state (hereinafter referred to as channel value) of a propagation path over which the signal has been propagated, by using a preamble signal etc. transmitted concurrently with the signal. The signal obtained as a result of the FFT operation is input to the waveform equalizer 116, in which the waveform is equalized in frequency domain by using the estimated channel value, to compensate for signal variations caused on the propagation path. Subsequently, the signal is subjected to parallel/serial conversion in the parallel/serial converter 117 and then is demodulated by the demodulator 118.

GI, which is important to the OFDM transmission system, will be now explained.

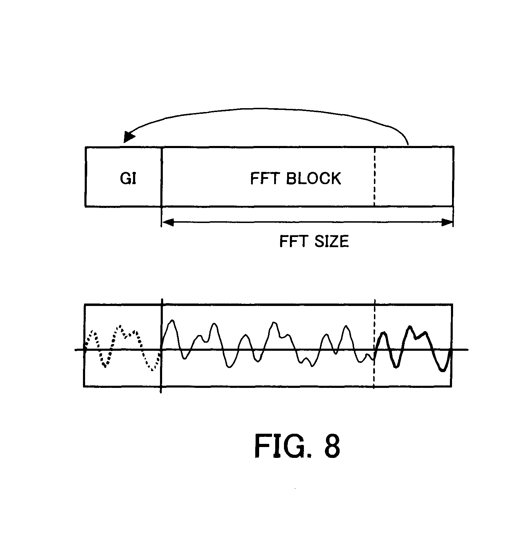

FIG. 8 illustrates a guard interval employed in the OFDM transmission system.

GI is created by adding part of the terminating portion of an FFT block, which has been subjected to the IFFT operation, to the beginning of the same block. Usually, in the case of an indoor wireless LAN (Local Area Network), an FFT block is affixed with a GI having a length equal to about 1/4 of the FFT block length. The longer the GI length, the lower the transmission efficiency becomes; therefore, a suitable value is selected for the GI length taking account of the propagation delay and the transmission efficiency. Researches are currently made also on a method of varying the GI length in accordance with a delay caused by the propagation path. The lower part of FIG. 8 shows a signal in the FFT block, wherein a waveform indicated by the dotted line denotes a signal added as GI and is identical with that at the terminating portion of the FFT block. Because of the nature of FFT, the signal remains continuous if the terminating portion of the FFT block is connected to the beginning of same. Thus, although the signal extracted by the block window includes GI, the signal can be demodulated.

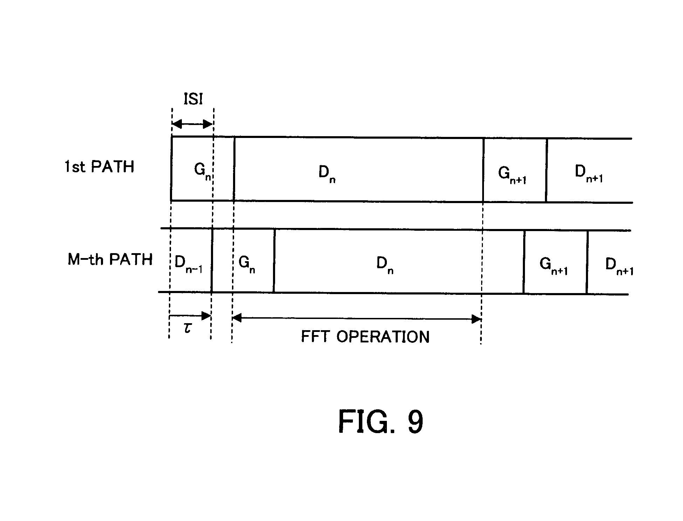

Effects of the guard interval will be now explained with reference to FIG. 9.

The figure shows a first arriving signal wave (or direct wave) and an M-th arriving signal wave, wherein a total number of arrival waves is M. The M-th wave is a delayed wave which arrives the latest. Where delayed waves which have a certain delay time or longer have a very low reception level, the M-th wave can be regarded as the latest one of the delayed waves of which the reception level is higher than or equal to an effective reception level. Dₙ denotes an n-th FFT block, Gₙ denotes a GI for the n-th block, and τ denotes a delay time for which the M-th wave is delayed from the first arriving wave. A preceding FFT block Dₙ₋₁ of the M-th wave overlaps with the Gₙ interval of the first arriving wave by the time τ, and this overlap causes inter-symbol interference (ISI). On the receiving side, however, Gₙ of the first arriving wave is removed and only the FFT block Dₙ is extracted and subjected to FFT operation. Since the extracted interval does not overlap with the preceding FFT block, no inter-symbol interference occurs. The extracted interval overlaps with the GIs of the delayed waves, but since the signal is continuous throughout the GI and the FFT block, as mentioned above, the signal can be demodulated, inclusive of the delayed waves. Thus, in an environment where the delay times of delayed waves fall within GI, the OFDM system can perform signal transmission free from inter-symbol interference, by adding GI at the transmitting side and removing GI at the receiving side.

However, in the cases where a large cell area is set as in outdoor applications and thus the signal transmission distance is long, or where a sufficient GI length cannot be set in view of transmission efficiency, it is likely that delay time exceeds the length of GI.

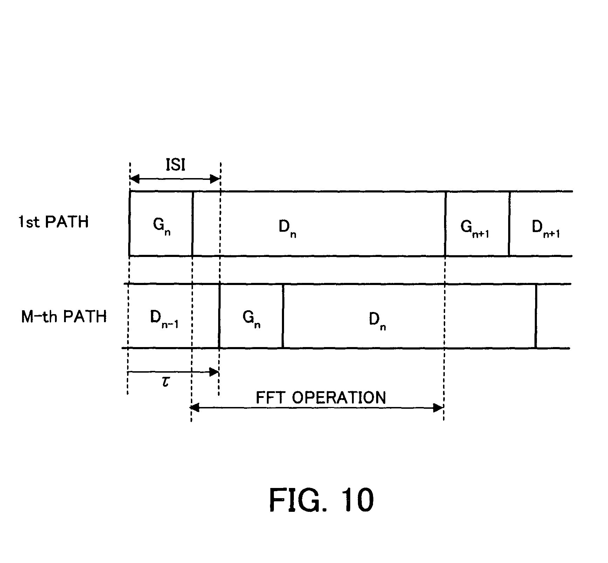

FIG. 10 illustrates the influence exerted by delayed wave exceeding the guard interval.

The M-th wave of the preceding FFT block Dₙ₋₁ overlaps with the current FFT block Dₙ. In this case, even if the GI is removed, the interval Dₙ remains influenced by the inter-symbol interference, causing performance degradation at the time of demodulation.

Thus, where there is a delayed wave whose delay time is longer than GI, a problem of performance degradation arises. Further, since GI is removed at the demodulating side, the transmission efficiency inevitably lowers, and the transmission efficiency becomes even lower where a greater GI length is set. Also, in environments where the delay time is short, GI is useless.

To solve the problems, it has been proposed a method in which the interfering component of GI is removed using a canceller or the like so that GI may also be effectively used at the receiving side. To carry out the method, however, a complex device is required. Another method has also been proposed in which multiple FFT operations are performed where the delay time is short, thereby permitting effective use of GI.

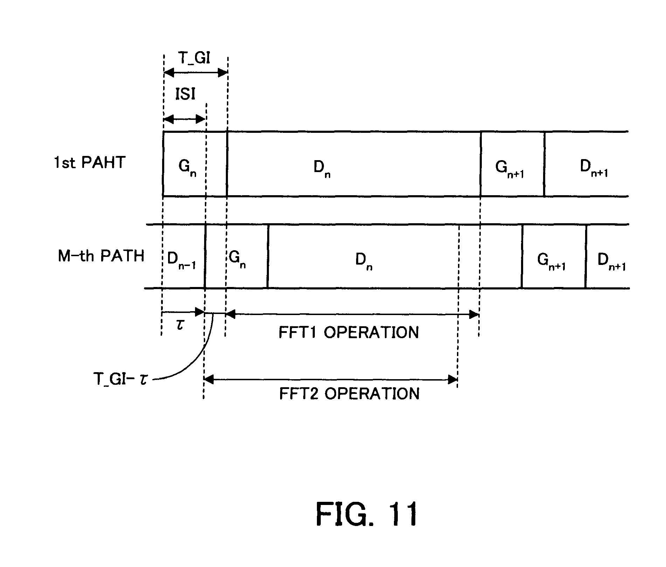

FIG. 11 illustrates such a method using multiple FFT operations.

Where the delay time τ is shorter than the GI length, the interval (T_GI - τ) is free from the interference of the preceding block, where T_GI is the GI time. To effectively use this interval, an FFT operation FFT2, in addition to a primary FFT operation FFT1, is performed in the interval shifted by (T_GI - τ), and the results of the two operations are synthesized, thereby obtaining a gain corresponding to (T_GI - τ) (e.g., Shizuno et al., "An OFDM Reception Method Employing plural FFTs with Adaptive Processing Duration," 2004, General Conference of The Institute of Electronics, Information and Communication Engineers, B-5-74). However, even this method is unable to cope with delayed waves exceeding GI length. Researches have also been made on a method in which the interference caused by delayed waves exceeding GI length is removed by using equalizers etc., but this method requires a complex device.

There are various other previously considered techniques related with OFDM transmission systems. For example, a receiver device has been considered whereby, even if a received wave is delayed from a main signal for a time longer than the guard interval or is advanced with respect to the main signal, the signals can be synthesized in perfect coincidence with no time difference (e.g., Japanese Unexamined Patent Publication No. H10-107777 (paragraph nos. [0069] to [0071], FIG. 1)). Also, a technique has been considered which is capable of stable detection of symbol synchronization irrespective of frequency offset, thereby enabling satisfactory demodulation of signal (e.g., Japanese Unexamined Patent Publication No. H10-322305 (paragraph no. [0036])).

Thus, in previously considered transmission systems, the transmission efficiency lowers because of the addition of GI, and especially in the case where the delay is shorter than the GI length, the remaining part of GI is of no use. Also, if the delay exceeds GI, inter-symbol interference occurs, deteriorating transmission characteristics. The method for removing such interference is associated with a problem that a complex device is required.

It is desirable to provide a transmission system which is simple in construction and yet can effectively avoid inter-symbol interference.

In one embodiment of an aspect of the invention, there is provided a transmission system whose receiving side receives, besides a direct wave, a plurality of delayed waves according to propagation path conditions. The transmission system comprises a transmitter device for transmitting a signal block while repeating the same signal block twice consecutively, and a receiver device for receiving the signal blocks. The receiver device performs Fourier transform operation on the two identical signal blocks at respective predetermined timings, matches phases of the two signal blocks with each other by waveform equalization in frequency domain, synthesizes the signal blocks, and demodulates the synthesized signal block.

In one embodiment of another aspect of the invention, there is provided a receiver device for receiving, besides a direct wave, a plurality of delayed waves according to propagation path conditions, wherein the receiver device receives a signal block of the direct wave or of the delayed waves twice consecutively, performs Fourier transform operation on the two identical signal blocks at respective predetermined timings, matches phases of the two signal blocks with each other by waveform equalization in frequency domain, combines the signal blocks, and demodulates the combined signal block.

The above and other features and advantages of the present invention will become apparent from the following description when taken in conjunction with the accompanying drawings which illustrate preferred embodiments of the present invention by way of example, in which:
FIG. 1 shows the configuration of an OFDM; transmission system according to an embodiment of the present invention;
FIG. 2 shows FFT operation intervals of the OFDM; transmission system of the embodiment;
FIGS. 3A, 3B and 3C illustrate how, in embodiments of the invention, the timing for starting the FFT operation is adjusted in the OFDM transmission system of the embodiment, wherein FIG. 3A shows the case where a delay time is short, FIG. 3B shows the case where the delay time is long, and FIG. 3C shows the case where the delay time is long and the attenuation of delayed waves is large;
FIG. 4 exemplifies a delay time-error rate characteristic of delayed waves according to an embodiment of the invention;
FIG. 5 shows the configuration of a previously considered single-carrier transmission system;
FIG. 6 shows the configuration of a single-carrier transmission system according to an embodiment of the present invention;
FIG. 7 shows the basic configuration of a previously considered OFDM transmission system;
FIG. 8 illustrates a guard interval employed in the OFDM transmission system;
FIG. 9 illustrates effects of the guard interval;
FIG. 10 illustrates the influence exerted by a delayed wave exceeding the guard interval; and
FIG. 11 illustrates a method employing multiple FFT operations.

Preferred embodiments of the present invention will be described below with reference to the accompanying drawings.

The following description is directed to an OFDM transmission system for transmitting/receiving an OFDM signal.

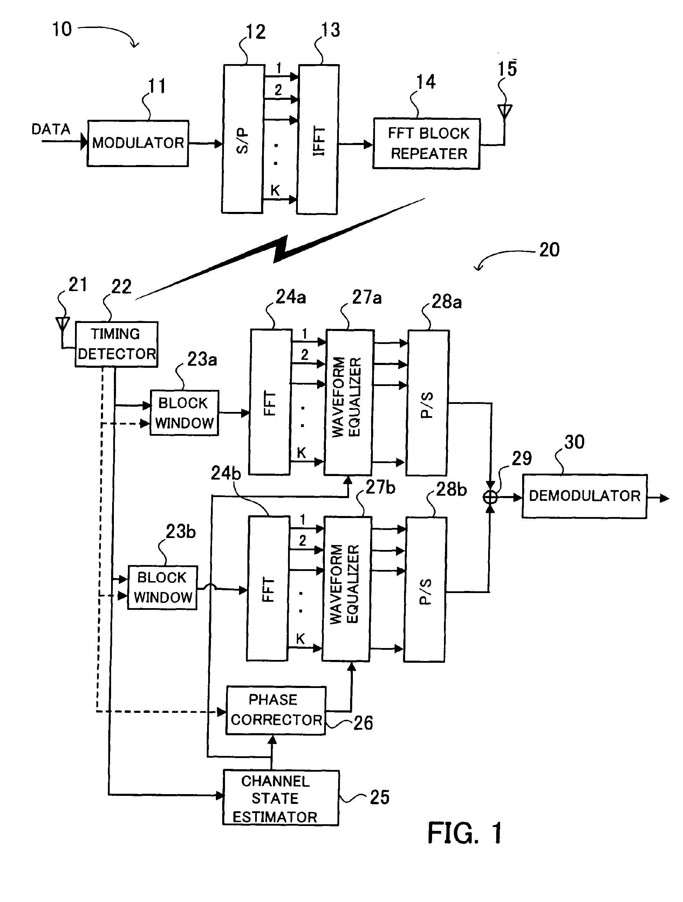

FIG. 1 shows the configuration of an OFDM transmission system according to an embodiment of the present invention.

A transmitter device 10 includes a modulator 11, a serial/parallel (S/P) converter 12, an IFFT processor 13, an FFT block repeater 14, and an antenna 15.

On the other hand, a receiver device 20 includes an antenna 21, a timing detector 22, block windows 23a and 23b, FFT processors 24a and 24b, a channel state estimator 25, a phase corrector 26, waveform equalizers 27a and 27b, parallel/serial (P/S) converters 28a and 28b, a synthesizer 29, and a demodulator 30.

In the transmitter device 10, the modulator 11 modulates data to be transmitted. The modulation scheme to be used may be QPSK (Quadrature Phase Shift Keying) or QAM (Quadrature Amplitude Modulation), for example.

The serial/parallel converter 12 subjects the modulated data to serial/parallel conversion to distribute the data to sub-carriers. It is assumed here that the number of sub-carriers is K.

The IFFT processor 13 performs IFFT operation on K symbols allotted to the respective sub-carriers to convert the symbols to a time domain signal, and outputs a set of K pieces of data, that is, an FFT block.

The FFT block repeater 14 transmits, via the antenna 15, the FFT block generated by the IFFT processor 13, while repeating the same FFT block twice consecutively.

In the receiver device 20, the timing detector 22 detects the arrival timings of respective arrival waves received by the antenna 21. For example, in the timing detector 22, a pilot pattern of each signal wave is detected to periodically measure a delay time τ of delayed wave with respect to the first arriving wave (direct wave).

The block windows 23a and 23b cut out FFT blocks for FFT operation from the arriving signal waves at respective predetermined timings. The block window 23a cuts out the arriving signal waves, inclusive of delayed waves, at the arrival timing of the second one (hereinafter referred to as second block) of the two FFT blocks consecutively transmitted on the first arriving wave. On the other hand, the block window 23b cuts out the arrival signal waves at the arrival timing of the first one (hereinafter referred to as first block) of the two FFT blocks consecutively transmitted on, for example, the latest arriving wave (i.e., after a lapse of the delay time τ), as described in detail later.

The FFT processors 24a and 24b perform FFT operation on the FFT blocks respectively extracted by the block windows 23a and 23b, to convert the blocks to frequency domain signals. In the following, the FFT operation performed by the FFT processor 24a, that is, the FFT operation performed on the second block, will be referred to as FFT2, while the FFT operation performed by the FFT processor 24b, that is, the FFT operation performed on the first block, will be referred to as FFT1.

The channel state estimator 25 estimates the channel value of a propagation path over which the signal has been propagated, by using a preamble signal etc. transmitted concurrently with data such as FFT blocks.

Based on the estimated channel value and the delay time τ detected by the timing detector 22, the phase corrector 26 corrects a phase difference corresponding to the delay time and caused between the two frequency domain signals obtained by FFT1 and FFT2, respectively. Specifically, the phase of the signal obtained by FFT1 is corrected. The correction is performed with respect to each sub-carrier k, and a correction value c(k) is given by c(k) = exp{-j2π(k/K)τs}, where K represents an FFT size, k = 1, ..., K, and τs represents a delay time expressed in terms of sampling time.

The waveform equalizers 27a and 27b respectively subject the results of FFT2 and FFT1 to waveform equalization in frequency domain, based on the estimated channel value, so that the amplitudes and phases of the arriving waves may be equalized among the sub-carriers, thereby compensating for signal variations caused on the propagation path. For the result of FFT1, the waveform equalization is performed using the above correction value c(k).

The parallel/serial (P/S) converters 28a and 28b each perform parallel/serial conversion with respect to the K sub-carriers.

The synthesizer 29 is supplied with the output signals from the parallel/serial converters 28a and 28b and combines these signals.

The demodulator 30 demodulates the signal combines by the synthesizer 29.

Operation of the OFDM transmission system of the embodiment will be now described with reference to specific examples.

In the transmitter device 10, data to be transmitted is modulated by the modulator 11 and then is subjected to serial/parallel conversion in the serial/parallel converter 12 so that the modulated data may be distributed to the sub-carriers. Subsequently, K symbols allotted to the respective sub-carriers are subjected to IFFT operation in the IFFT processor 13 to be converted to a time domain signal, whereupon a set of K pieces of data, that is, an FFT block, is output. The FFT block repeater 14 then transmits, via the antenna 15, the FFT block generated by the IFFT processor 13 while repeating the same FFT block twice consecutively.

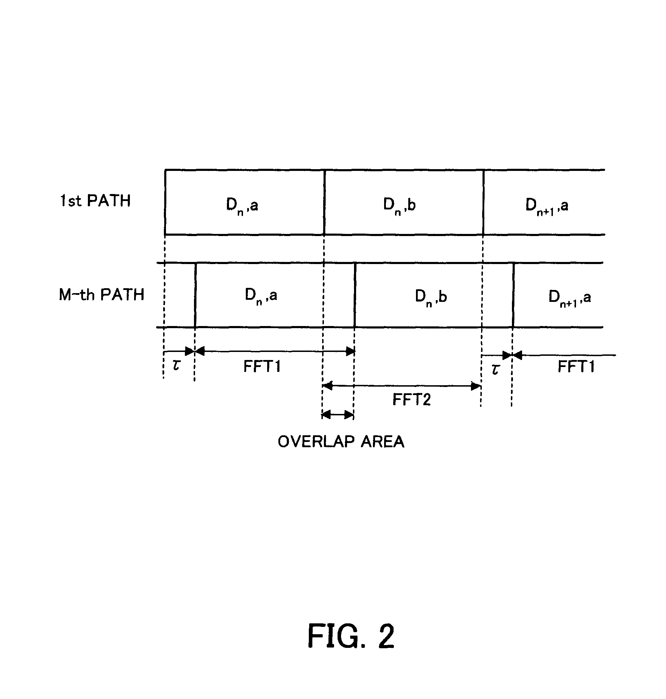

FIG. 2 shows FFT operation intervals of the OFDM transmission system of the embodiment.

In FIG. 2, two identical n-th FFT blocks are indicated by "Dₙ,a" and "Dₙ,b", respectively. Also, it is assumed that the receiver device 20 receives a first arriving signal wave, as well as an M-th signal wave after a lapse of the delay time τ, where M is a total number of arrival waves, and that the M-th wave is a delayed wave arriving the latest. Where delayed waves which have a certain delay time or longer have a very low reception level, the M-th wave can be regarded as the latest one of the delayed waves of which the reception level is higher than or equal to an effective reception level. During the delay time τ, the second through (M - 1)th delayed waves arrive to the receiver as well as the first and the M-th waves but are omitted from the figure.

When the signal as shown in FIG. 2 is received, the block window 23a cuts out the arriving signal waves at the arrival timing of the second one "Dₙ,b" of the two identical FFT blocks repeatedly transmitted on the first arriving wave, to cause the FFT processor 24a to perform the required FFT operation (FFT2). At this time, the first block "Dₙ,a" serves as a GI as previously considered. The block window 23b, on the other hand, cuts out the arriving signal waves after the delay time τ of the M-th wave detected by the timing detector 22 (i.e., at the arrival timing of the first block "Dₙ,a" on the M-th wave), to cause the FFT processor 24b to perform the required FFT operation (FFT1). In this case, the delay time τ permits the start point of FFT1 to be set on the basis of the arrival timing of the first wave. Thus, the FFT1 interval is shifted by the delay time τ with respect to the first arriving wave, whereby inter-symbol interference can be avoided. The two FFT operations have an overlap area corresponding to the delay time τ, and this area entails a loss at the time of the subsequent synthesis. Since, however, the FFT1 operation timing can be adjusted in accordance with the delay time of the delayed wave, higher efficiency than that obtained in the case of adding fixed-length GI can be achieved.

The results of the FFT operations are input to the respective waveform equalizers 27a and 27b. Then, based on the channel value estimated by the channel state estimator 25, the results of the FFT1 and FFT2 operations are subjected to waveform equalization in frequency domain so that amplitudes and phases may be equalized among the sub-carriers, thereby compensating for signal variations caused on the propagation path. In this case, the result of the FFT1 operation is subjected to the waveform equalization by using the aforementioned correction value c(k). Subsequently, the resulting signals are subjected to parallel/serial conversion in the parallel/serial (P/S) converters 28a and 28b, the output signals from which are synthesized by the synthesizer 29. Then, the signal synthesized by the synthesizer 29 is demodulated by the demodulator 30.

The following describes in detail how the FFT operation start timing is adjusted.

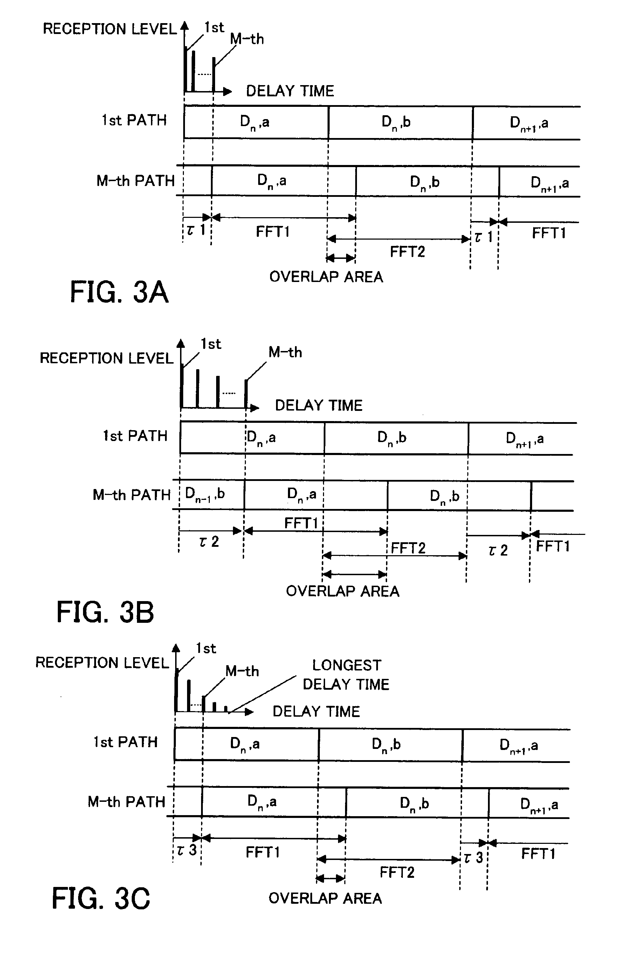

FIGS. 3A, 3B and 3C illustrate the manner of how the FFT operation start timing is adjusted in the OFDM transmission system of the embodiment, wherein FIG. 3A shows the case where the delay time is short, FIG. 3B shows the case where the delay time is long, and FIG. 3C shows the case where the delay time is long and also the attenuation of delayed waves is large.

The relationship between the delay time and reception level of individual arriving waves is schematically shown at the upper left part of each of FIGS. 3A, 3B and 3C.

In the case where the delay time is short as shown in FIG. 3A, the FFT1 start timing is adjusted based on a delay time τ1 of the M-th wave by the block window 23b. Consequently, the overlap area of the two FFT1 and FFT2 operations is short, thus ensuring higher efficiency than that obtained in the previously considered case of inserting fixed-length GI.

On the other hand, where the delay time is long as shown in FIG. 3B, the FFT1 start timing is adjusted based on a delay time τ2 of the M-th wave by the block window 23b. In previously considered systems, if the delayed time is longer than the GI length, the transmission characteristics deteriorate due to inter-symbol interference. In the OFDM transmission system of the embodiment, by contrast, no inter-symbol interference occurs, and accordingly, the deterioration can be restricted to moderate deterioration attributable to increase in the overlap area.

Also, where the reception levels of delay waves are attenuated greatly as shown in FIG. 3C, the block window 23b adjusts the FFT1 start timing on the basis of a delay time τ3 of the latest one (M-th wave) of the delayed waves whose reception level is higher than or equal to the effective reception level, namely, in advance of the timing of the arrival wave whose delay time is the longest. In this case, inter-symbol interference is caused by the delayed waves arriving later than the time τ3; however, the reception levels of these delayed waves, and thus the magnitude of the interference, are small. On the contrary, the inconvenience caused by the interference is surpassed by the advantage that deterioration in the transmission characteristics can be suppressed by reducing the overlap area.

Currently, attempts are being made to realize smooth handoffs between a wireless LAN system (wireless LAN set up outdoors is called hotspot) and a mobile telephone system. In wireless LAN, the distance of a terminal to an access point is generally limited less than hundred meters, whereas a mobile telephone has a propagation distance of several kilometers at a maximum, which is over 100 times as long as the case of wireless LAN. Consequently, the delay times of delayed waves vary greatly depending on the propagation distance. With the OFDM transmission system of this embodiment, such changes in propagation environment, especially changes in the delay time, can be flexibly coped with by just suitably setting the FFT1 start timing of the receiver device 20, and the inter-symbol interference can be avoided more effectively than in the case of using fixed-length GI. Also, the system does not require complex equalizers for removing the inter-symbol interference and thus can be simplified in construction.

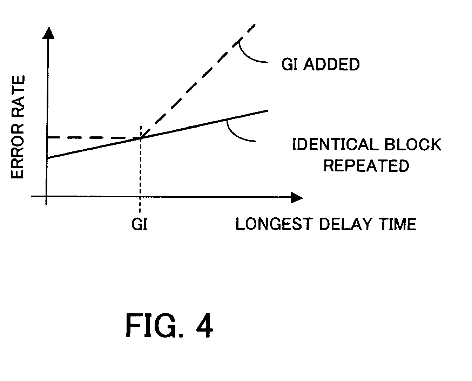

FIG. 4 exemplifies a delay time-error rate characteristic of delayed waves, wherein the horizontal axis indicates the longest delay time and the vertical axis indicates signal error rate.

FIG. 4 also shows a characteristic obtained by a previously considered system using GI, for the sake of comparison. In the previously considered system, the error rate is constant if the longest delay time remains within the GI. If the longest delay time exceeds the GI, however, the error rate sharply rises due to inter-symbol interference. On the other hand, the OFDM transmission system of the embodiment in which an identical FFT block is transmitted and received twice consecutively shows quite a different characteristic. Specifically, in the case where the longest delay time is equal to the GI length of the previously considered system, the error rate is almost equal to that of the previously considered system, because the overlap area is equal to the GI length. Where the longest delay time is shorter, however, the FFT1 start timing is advanced and thus the overlap area shortens, so that improved transmission characteristics are obtained, compared with the previously considered system. Also, in the case where the longest delay time is longer than the GI length, the inter-symbol interference can be avoided by delaying the FFT1 start timing in accordance with the longest delay time, and thus deterioration in the transmission characteristics can be restricted to moderate deterioration attributable to increase in the overlap area.

So far the present invention has been described on the premise that embodiments of the invention are applied to OFDM transmission systems. It should be noted, however, that the present invention is equally applicable to frequency-domain equalization techniques for single-carrier transmission which is recently attracting attention.

In the following, single-carrier transmission will be briefly explained.

Single-carrier transmission systems include a spread spectrum (SS) system for spreading signal and a code division multiple access (CDMA) system.

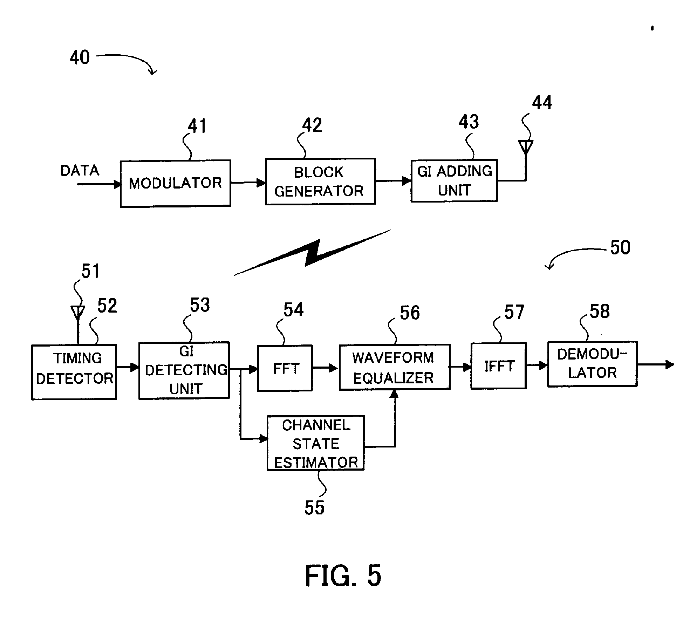

FIG. 5 shows the configuration of a previously considered single-carrier transmission system.

In the single-carrier transmission system, a transmitter device 40 includes a modulator 41 for modulating data to be transmitted, a block generator 42 for generating an FFT block containing multiple pieces of data corresponding to an FFT size, a GI adding unit 43 for adding a GI to the FFT block, and an antenna 44. A receiver device 50 includes an antenna 51, a timing detector 52 for detecting the arrival timings of respective arriving waves received by the antenna 51, a GI deleting unit 53 for removing the GI, an FFT processor 54 for performing FFT operation on the received FFT block to convert the block to a frequency domain signal, a channel state estimator 55 for estimating the channel value of the propagation path, a waveform equalizer 56 for subjecting the result of the FFT operation to waveform equalization in frequency domain, based on the estimated channel value, to compensate for signal variations caused on the propagation path, an IFFT processor 57 for performing IFFT operation on the waveform-equalized signal to convert the signal to a time domain signal, and a demodulator 58 for demodulating the result of the IFFT operation.

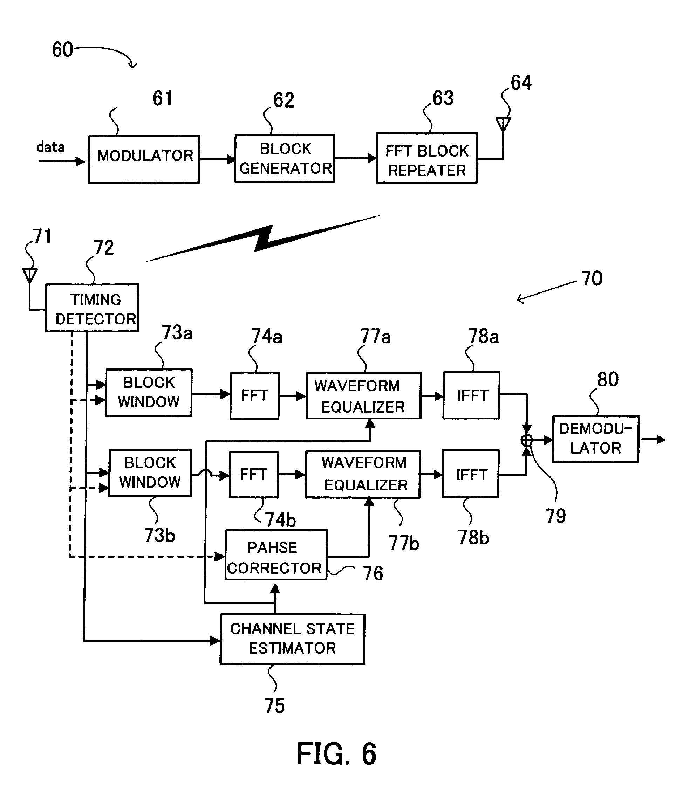

FIG. 6 shows the configuration of a single-carrier transmission system according to an embodiment of the present invention.

In the single-carrier transmission system of the embodiment, a transmitter device 60 includes a modulator 61 for modulating data to be transmitted, a block generator 62 for generating an FFT block containing multiple pieces of data corresponding to an FFT size, and an FFT block repeater 63 for transmitting the generated FFT block via an antenna 64 while repeating the same FFT block twice consecutively. A receiver device 70 includes an antenna 71, a timing detector 72 for detecting the arrival timings of respective arriving waves received by the antenna 71, block windows 73a and 73b for cutting out the FFT block for FFT operation at respective predetermined timings, FFT processors 74a and 74b for performing FFT operation on the respective extracted FFT blocks to convert the blocks to frequency domain signals, a channel state estimator 75 for estimating the channel value of the propagation path, a phase corrector 76 for correcting a phase difference corresponding to a delay time and caused between the two frequency domain signals obtained as a result of the two FFT operations, waveform equalizers 77a and 77b for subjecting the results of the FFT operations to waveform equalization in frequency domain, based on the estimated channel value and the phase correction value, to compensate for signal variations caused on the propagation path, IFFT processors 78a and 78b for performing IFFT operation on the respective waveform-equalized signals to convert the signals to time domain signals, a synthesizer 79 for combining the results of the IFFT operations, and a demodulator 80 for demodulating the combined signal.

The single-carrier transmission system of this embodiment is similar to the OFDM transmission system shown in FIG. 1 and differs therefrom in that the IFFT operation is performed at the end of the receiving side, instead of the transmitting side. The functions of the other elements are almost identical with those of the corresponding elements in the OFDM transmission system of FIG. 1, and therefore, detailed description of the elements is omitted.

Also, in the single-carrier transmission system, the transmitter device 60 transmits an FFT block while repeating the same FFT block twice consecutively, and the receiver device 70 receives the FFT blocks, performs FFT operation on the two identical FFT blocks at respective timings as shown in FIG. 3, and matches the phases of the two FFT blocks with each other by the waveform equalization in frequency domain. Then, after IFFT operation is performed, the FFT blocks are combined and demodulated, whereby advantages similar to those obtained by the OFDM transmission system of the foregoing embodiment can be achieved.

In the transmission system according to embodiments of the present invention, the transmitter device transmits a signal block while repeating the same signal block twice consecutively, and the receiver device receives the signal blocks and performs Fourier transform operation on the two identical signal blocks at respective predetermined timings. After the phases of the two signal blocks are matched with each other by the frequency-domain waveform equalization, the signal blocks are combined and demodulated. Accordingly, various propagation path conditions, in particular, changes in delay time can be flexibly coped with by just appropriately setting the Fourier transform operation timing, whereby inter-symbol interference can be avoided more effectively than in the case of using fixed-length GI. Also, since it is unnecessary to use complex equalizers in order to remove inter-symbol interference, the transmission system can be simplified in construction.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims.

## Claims

1. A transmission system whose receiving side receives, besides a direct wave, a plurality of delayed waves delayed according to propagation path conditions, comprising:
a transmitter device for transmitting a signal block while repeating the same signal block twice consecutively; and
a receiver device for receiving the signal blocks, the receiver device performing Fourier transform operation on the two identical signal blocks at respective predetermined timings, matching phases of the two signal blocks with each other by waveform equalization in frequency domain, combining the signal blocks, and demodulating the combined signal block.

2. The transmission system according to claim 1, wherein the receiver device includes a first Fourier transform processor for performing the Fourier transform operation on a first signal block of the received two identical signal blocks after time interval determined by arrival timing of the direct wave, and a second Fourier transform processor for performing the Fourier transform operation on a second signal block of the received two identical signal blocks at arrival timing of the second signal block of the direct wave.

3. The transmission system according to claim 2, wherein the time interval is a delay time of a delayed wave arriving the latest.

4. The transmission system according to claim 2, wherein the time interval is the delay time of the latest arriving wave whose reception level is higher than or equal to an effective reception level.

5. The transmission system according to claim 2, wherein the receiver device further includes a phase corrector for correcting, based on a state of a propagation path over which the signal has been propagated and a delay time of the signal, a phase difference corresponding to the delay time and caused between two frequency domain signals obtained as a result of the operations by the first and second Fourier transform processors.

6. The transmission system according to claim 1, wherein the transmitter device carries out multi-carrier transmission, and the signal block transmitted twice consecutively from the transmitter device comprises an orthogonal frequency division multiplexed signal which has been subjected to inverse Fourier transform operation.

7. The transmission system according to claim 1, wherein the transmitter device carries out single-carrier transmission, the signal block transmitted twice consecutively from the transmitter device comprises a plurality of data, and
the receiver device performs inverse Fourier transform operation on the two identical signal blocks after the waveform equalization, then combines the signal blocks and demodulates the combined signal block.

8. A transmitter device for carrying out multi-carrier transmission, wherein the transmitter device transmits a signal block comprising an orthogonal frequency division multiplexed signal which has been subjected to inverse Fourier transform operation, while repeating the same signal block twice consecutively.

9. A transmitter device for carrying out single-carrier transmission, wherein the transmitter device transmits a signal block comprising a plurality of data while repeating the same signal block twice consecutively.

10. A receiver device for receiving, besides a direct wave, a plurality of delayed waves according to propagation path conditions, wherein the receiver device receives a signal block of the direct wave or of the delayed waves twice consecutively, performs Fourier transform operation on the two identical signal blocks at respective predetermined timings, matches phases of the two signal blocks with each other by waveform equalization in frequency domain, combines the signal blocks, and demodulates the combined signal block.
